# EUROPÄISCHE PATENTANMELDUNG

(11) **EP 0 835 785 A2**
(43) Veröffentlichungstag der Anmeldung: **15.04.1998**
(21) Anmeldenummer: 97114527.1
(22) Anmeldetag: 22.08.1997
(51) Int. Cl.: B60R 1/08

(54) **Omnibus, insbesondere Reise- oder Linienbus, sowie Aussenspiegel zur Verwendung bei einem Omnibus**

(30) Priorität: 01.10.1996 DE 29617073 U
(71) Anmelder: MEKRA Lang GmbH & Co. KG, 90765 Fürth (DE)
(72) Erfinder: Lang, Heinrich, 91465 Ergersheim (DE); Seiboth, Wolfgang, 91438 Bad Windsheim (DE); Popp, Albrecht, 91629 Weihenzell (DE)
(74) Vertreter: Hübner, Gerd, Dipl.-Phys.

(57) **Zusammenfassung**

Ein Omnibus ist mit einer am vorderen Ende des Busses (1) auf der Beifahrerseite angeordneten Einstiegstür (2) und einem auf der Seite der Einstiegstür (2) gelegenen Außenrückblickspiegel (5) versehen. Letzterer weist eine vorzugsweise sphärisch gekrümmte Spiegelscheibe zur Beobachung der auf der Beifahrerseite ablaufenden Vorgänge auf. Zur Überwachung des vollständigen Einstiegsbereiches des Busses (1) vom Fahrerplatz (F) aus, ist die Spiegelscheibe mit einem zu ihrem unteren Randbereich (13) hin asphärisch gekrümmten Bereich (11) zur Sichtfelderweiterung (16) nach unten versehen.

## Beschreibung

Die Erfindung betrifft einen Omnibus, insbesondere einen Reise- oder Linienbus mit dem im Oberbegriff des Anspruchs 1 angegebenen Merkmalen. Ferner umfaßt die Erfindung einen Außenspiegel zur Verwendung bei einem solchen Bus.

Der Erfindung liegt die Problematik zugrunde, daß voluminöse Fahrzeuge, wie LKW oder Omnibusse Bereiche aufweisen, die vom Fahrer nicht oder nur sehr schwer eingesehen werden können. Demzufolge besteht die Gefahr von schweren Unfällen beim Anfahren solcher Fahrzeuge.

Ein sicherheitstechnisch besonders sensibler Bereich ist bei Reise- oder Linienbussen der Einstiegsbereich von der vorderen Einstiegstür. Wenn hier beispielsweise im Schulbusverkehr kleinere Kinder in Richtung der bereits geschlossenen Einstiegstür laufen, können diese vom Fahrer leicht übersehen werden, was naturgemäß fatale Folgen haben kann.

Insofern ist es unter Sicherheitsaspekten wichtig, den Einstiegsbereich von Omnibussen vollständig zu überwachen, was bekanntermaßen mit Zusatzspiegeln erreicht wird, die z. B. am horizontal verlaufenden Auslegerarm des Hauptspiegels mit Blickrichtung nach unten montiert sind. Für eine einwandfreie Überwachung des Einstiegsbereiches muß der Fahrer also beim Anfahren in den Zusatzspiegel schauen, um anschließend nach Blick in den Hauptspiegel sein Fahrzeug sicher in Bewegung setzen zu können.

Problematisch hierbei ist, daß zwei Spiegel im Auge behalten werden müssen. Vergißt der Fahrer, in den Zusatzspiegel zu schauen, besteht die Gefahr, daß eine Person im Einstiegsbereich unbemerkt bleibt. Die bekannte Spiegelanordnung birgt also ein erhebliches Unfallrisiko in sich.

Davon ausgehend liegt der Erfindung die Aufgabe zugrunde, dieses Unfallrisiko zu reduzieren.

Diese Aufgabe wird durch die in den Kennzeichnungsteilen des Anspruchs 1 beziehungsweise 4 angegebenen Merkmale gelöst. Demnach ist die Spiegelscheibe des eigentlichen Außenrückblickspiegels - also des beifahrerseitigen Hauptspiegels des Busses - in ihrem unteren Randbereich mit einem asphärisch konvex gekrümmten Bereich zur Sichtfelderweiterung nach unten versehen. Damit ist eine Überwachung der auf der Beifahrerseite ablaufenden Vorgänge inklusive einer Überwachung des vollständigen Einstiegsbereiches durch Blick in den einzigen Hauptspiegel auf der Beifahrerseite möglich.

Die Ansprüche 2 und 3 beziehungsweise 5 und 6 kennzeichnen bevorzugte Dimensionsangaben für die Auslegung des sphärischen und asphärischen Bereiches der Spiegelscheiben.

Weitere Merkmale, Einzelheiten und Vorteile der Erfindung sind der nachfolgenden Beschreibung entnehmbar, in der ein Ausführungsbeispiel des Erfindungsgegenstandes anhand der beigefügten Zeichnungen näher erläutert wird. Es zeigen:
- Fig. 1: eine schematische Seitenansicht eines Omnibusses,
- Fig. 2: einen Vertikalschnitt durch eine Spiegeltragplatte mit aufgeklebter Spiegelscheibe des Außenrückblickspiegels, und
- Fig. 3: eine Draufsicht auf die Spiegeltragplatte mit Spiegelscheibe aus Pfeilrichtung III gemäß Fig. 2.

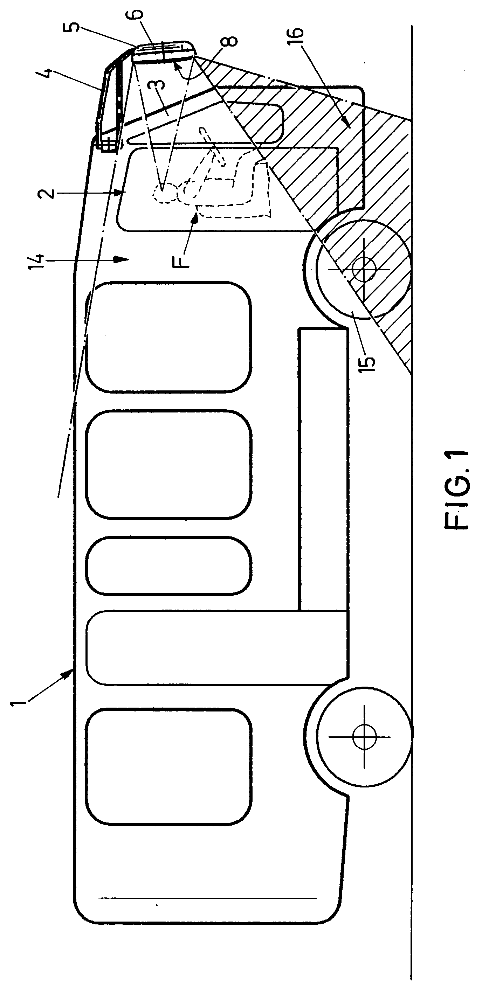

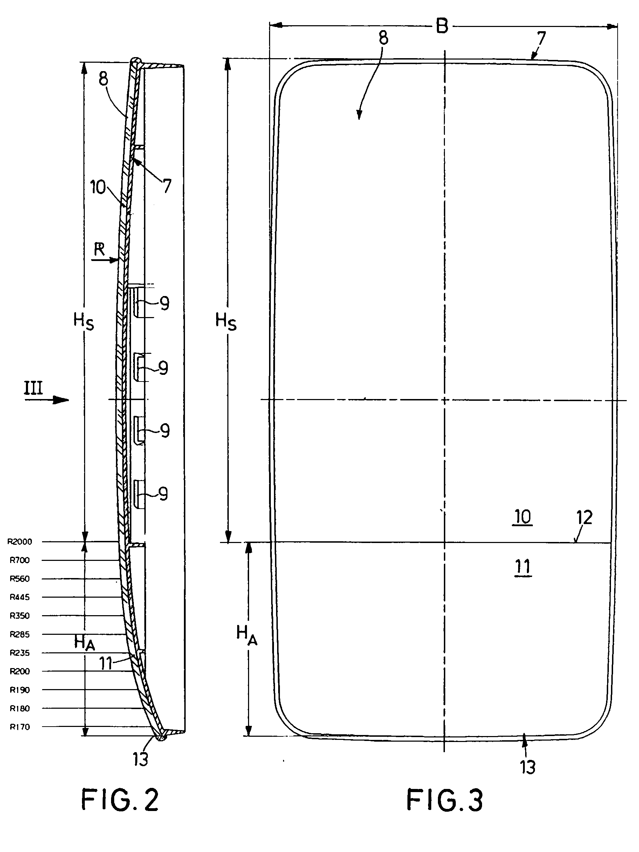

In Fig. 1 ist ein Omnibus 1 gezeigt, der am vorderen Ende auf der Beifahrerseite eine verglaste Einstiegstür 2 aufweist. Am oberen Ende der A-Säule 3 des Busses ist mittels eines Tragarmes 4 der beifahrerseitige Hauptspiegel 5 montiert. Dieser weist ein Gehäuse 6 auf, in dem über ein Verstellaggregat eine Spiegeltragplatte 7 (Fig. 2, 3) verschwenkbar gelagert ist, die eine Spiegelscheibe 8 trägt. Die Anbringung des Hauptspiegels 5 am Tragarm 4, die Ausbildung des nicht eigens dargestellten Verstellaggregates und die Befestigung der Spiegeltragplatte 7 auf letzterem kann variabel ausgestaltet werden, ist jedoch aus dem Stand der Technik bekannt und üblich. In diesem Zusammenhang wird z. B. auf die EP 0 609 508 A1 verwiesen, die eine sogenannte "Klemmschlußverbindung" zwischen den Vorsprüngen 9 an der Spiegeltragplatte 7 mit einer (hier nicht dargestellten) Halteplatte am Verstellaggregat zeigt.

Wie aus Fig. 2 und 3 deutlich wird, ist die Spiegelscheibe 8 in einen obenliegenden sphärischen Bereich 10 und einen asphärischen Bereich 11 im unteren Teil unterteilt. Der sphärische Bereich 10 nimmt die Breite B der Spiegelscheibe und eine Höhe H _{S} ein. Dort beträgt der Krümmungsradius der konvex gewölbten Spiegelscheibe 8 etwa 2000 mm (siehe Hinweis "R2000" in Fig. 2). Ab der durch eine feine, geätzte Linie 12 auf der Spiegelscheibe 8 angedeuteten Grenze zwischen dem sphärischen und asphärischen Bereich 10, 11 reduziert sich der Krümmungsradius schrittweise von 700 mm über 560 mm, 445 mm, 350 mm, 285 mm, 235 mm, 200 mm, 190 mm und 180 mm auf 170 mm am unteren Rand 13 der Spiegelscheibe 8. Dies ist in Fig. 2 durch die Hinweise "R700", "R560" ... bis ... "R170" angedeutet. Der konvexe Krümmungsverlauf im asphärischen Bereich 11 ist dabei im wesentlichen auf eine zunehmende Wölbung um horizontale Krümmungsachsen beschränkt. Das Verhältnis H _{S}: H _{A} von Höhe des sphärischen Bereiches 10 zu Höhe des asphärischen Bereiches 11 verhält sich etwa wie 2,5 : 1.

Mit der vorstehend beschriebenen Auslegung der Spiegelscheibe 8 wird vom strichliert dargestellten Fahrerplatz F aus das in Fig. 1 dargestellte Sichtfeld erzielt. Das Hauptsichtfeld 14, das etwa vom Vorderrad 15 beginnend die Restlage des Omnibusses 1 nach hinten abdeckt, wird ergänzt durch eine durch den asphärischen Bereich 11 hervorgerufene Sichtfelderweiterung 16 (schraffiert dargestellt), die den gesamten Einstiegsbereich vor und unterhalb der Einstiegstür 2 erfaßt.

## Patentansprüche

1. Omnibus, insbesondere Reise- oder Linienbus, mit
- einer am vorderen Ende des Busses (1) auf der Beifahrerseite angeordneten Einstiegstür (2), und
- einem auf der Seite der Einstiegstür (2) gelegenen Außenrückblickspiegel (5), der mit einer vorzugsweise sphärisch gekrümmten Spiegelscheibe (8) zur Beobachtung der auf der Beifahrerseite ablaufenden Vorgänge versehen ist,
**dadurch gekennzeichnet, daß** zur Überwachung des vollständigen Einstiegsbereiches des Busses (1) vom Fahrerplatz (F) aus die Spiegelscheibe (8) einen zu ihrem unteren Randbereich (13) hin asphärisch gekrümmten Bereich (11) zur Sichtfelderweiterung (16) nach unten aufweist.

2. Omnibus nach Anspruch 1, **dadurch gekennzeichnet, daß** sich die Höhe (H _{S}) des spärischen Bereichs (10) zu der Höhe (H _{A}) des asphärischen Bereiches (11) wie etwa 2,25:1 bis 2,75:1 verhält.

3. Omnibus nach Anspruch 1 oder 2, **dadurch gekennzeichnet, daß** der Krümmungsradius (R) im sphärischen Bereich (10) etwa 2000 mm beträgt und im asphärischen Bereich schrittweise auf bis zu 150 mm abnimmt.

4. Außenspiegel zur Verwendung bei einem Omnibus nach einem der Ansprüche 1 bis 3, **dadurch gekennzeichnet, daß** zur Überwachung des Einstiegsbereiches des Busses (1) vom Fahrerplatz aus die Spiegelscheibe (8) einen zu ihrem unteren Randbereich hin asphärisch gekrümmten Bereich (11) zur Sichtfelderweiterung (16) nach unten aufweist.

5. Außenspiegel nach Anspruch 4, **dadurch gekennzeichnet, daß** sich die Höhe (H _{S}) des spärischen Bereichs (10) zu der Höhe (H _{A}) des asphärischen Bereiches (11) wie etwa 2,5:1 bis 3:1 verhält.

6. Außenspiegel nach Anspruch 4 oder 5, **dadurch gekennzeichnet, daß** der Krümmungsradius (R) im sphärischen Bereich (10) etwa 2000 mm beträgt und im asphärischen Bereich (11) schrittweise auf etwa 150 mm abnimmt.
